# EUROPEAN PATENT SPECIFICATION

(11) **EP 2 031 841 B1**
(45) Date of publication and mention of the grant of the patent: **19.04.2017**
(21) Application number: 07115195.5
(22) Date of filing: 29.08.2007
(51) Int. Cl.: H04M 1/247, H04M 1/64, H04M 1/725

(54) **Voicemail system for a handheld device**
Voicemail-System für ein tragbares Gerät
Système de messagerie vocale pour dispositif portable

(43) Date of publication of application: 04.03.2009
(73) Proprietor: BlackBerry Limited, Waterloo, ON N2K 0A7 (CA)
(72) Inventor: Bulgin, Scott E, Waterloo Ontario N2V 1A4 (CA); Mak-Fan, David, Waterloo Ontario N2K 4B1 (CA); Kuhl, Larry, Waterloo Ontario N2V 2G9 (CA)
(74) Representative: MERH-IP Matias Erny Reichl Hoffmann Patentanwälte PartG mbB

(56) References cited:
- WO-A-99/16181
- WO-A-2007/002753
- WO-A1-00/62511
- US-A1- 2006 094 358
- US-B1- 6 240 299

## Description

The present patent document relates generally to a voicemail system and more particularly to a voicemail system suitable for handheld communication devices.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyright rights whatsoever.

Handheld devices such as Personal Digital Assistants (PDAs), cellular phones, portable computing devices and other two-way data and/or voice communication devices are fast becoming ubiquitous. In particular, powerful handheld devices that allow both voice and data communication are now fairly common in certain businesses and government agencies. Such handheld communication devices are in high demand, as they permit voice and electronic communication, as well as management of personal and business related information using email, calendars, contacts and address books, all without impeding mobility. Popular handheld devices include those supplied by Research In Motion Ltd. of Waterloo, Ontario, Canada.

A number of communications services that are typically accessed through handheld devices preceded the proliferation of powerful handheld devices. As such, certain inherent deficiencies may be present that could be avoided with a re-design of the provisioned application to take the capabilities of the mobile handheld device fully into account.

A typical example of such a service is voicemail. Voicemail is designed as a service provisioned by a network provider. A user accesses his or her voicemail by calling into the network, keying in an appropriate authentication such as a mailbox number and password, and generally interacting with the voicemail system by inputting data, typically through a touchtone telephone interface, and receiving feedback through voice instructions.

This has several disadvantages. First, the user is not able to see at a glance how many messages are waiting, when they were received, and who may have sent them. The user must go though each message sequentially, listening to instructions and keying in responses, to answer questions and to make menu selections regarding whether to listen to the message, skip it, delete it or store it.

Secondly, since the user cannot see the messages, the user cannot skip to the messages that he is interested in. As a result, time is wasted dealing with messages not of current interest to the user. At a minimum, at least some time must elapse as the user listens to information about the sender before moving on to the next message, even when deciding to skip the current message.

Accessing voicemail as described above has served older telephone devices well, and has provided a degree of location independence. However, today's wireless digital handheld devices have far greater digital processing power and better screens that may be harnessed to provide a superior voicemail service.

WO99/16181A discloses a system and method in which email and voicemail messages are stored locally at a portable telephone with a screen which displays both email and voicemail messages. A user may select a voicemail message and press play to hear the message.

WO2007/002753A discloses a system and method in which voice mail is stored locally on a cellular telephone. The phone has a voice mail screen and a separate email screen. A voice mail message can be deleted by pressing a key. A caller can specify a subject to be stored with a voice mail message being left.

US2006/0094358A1 discloses a system and method in which a cell phone can download voice mail from a central voice mail system.

US-B1-6,240,299 discloses a system and method for a digital telephone answering machine on a cellular telephone in which speech is compressed for compact storage.

Accordingly, there is a need for an improved voicemail system for handheld devices that improves ease of use, reduces unnecessary user input, and reduces network connection time.

### BRIEF DESCRIPTION OF THE DRAWINGS

Aspects and features of the disclosed device and method will become apparent to those of ordinary skill in the art upon review of the following description of specific embodiments in conjunction with the accompanying figures. In the figures which illustrate example embodiments:
**FIG. 1** is a schematic diagram depicting a typical networked environment in which a handheld computing device may be used;
**FIG. 2** is a block diagram of the various components of a handheld device;
**FIG. 3** is a screenshot of a user interface used in a conventional voicemail system executing on the handheld device of **FIG. 2****;**
**FIG. 4** is a further screenshot of a user interface used in a conventional voicemail system;
**FIG. 5** is a flowchart depicting typical steps taken by a user, operating the handheld device of **FIG. 2****,** to access his or her audio messages stored in a conventional voicemail system;
**FIG. 6** is a screenshot of a user interface for a voicemail system exemplary of one embodiment disclosed herein, displaying voicemail messages together with email messages and text messages;
**FIG. 7** is another screenshot of the user interface of **FIG. 6****,** depicting a context menu presented after a voicemail message record is opened;
**FIG. 8** is a screenshot of a user interface on a handheld device, for a voicemail system exemplary of another embodiment, displaying interrelated voicemail messages as threaded exchanges;
**FIG. 9** is a block diagram of a database storing data associating callers with message records; and
**FIG. 10** is a flowchart depicting actions taken by the handheld device of FIG. 2 as an incoming call is passed to its voicemail system.
**FIG. 11** is a flowchart depicting actions taken by the handheld device of Fig. 2 if the handheld user replies to a message.

### GENERAL

The object of the invention is solved by the subject matter of the independent claims. Preferred embodiments are defined in the dependent claims.

One aspect of the invention provides, a method of providing a voicemail service at a handheld wireless device comprising: recording an incoming audio message in a local memory of said handheld device; and displaying an incoming audio message record, corresponding to said incoming audio message, in a user interface screen of said handheld device, said user interface screen contemporaneously presenting email message records along with said incoming audio message record; placing a call to a recipient; determining that said call is answered by a remote voicemail system; transmitting an outgoing audio message to said remote voicemail system; and displaying in said user interface screen an outgoing message record for said outgoing audio message.

Another aspect of the invention provides, a handheld device comprising: a wireless receiver; a speaker; a memory; a display; and a processor, operable to: transition said device to answering-machine mode and record an incoming audio message from said caller in said memory; display an incoming audio message record corresponding to said audio message in a user interface screen on said display, said screen contemporaneously presenting email message records and said incoming audio message record; record in said memory using said microphone, an outgoing audio message left on a remote voicemail system; and display an outgoing message record corresponding to said outgoing audio message on said user interface screen.

### DESCRIPTION OF PREFERRED EMBODIMENTS

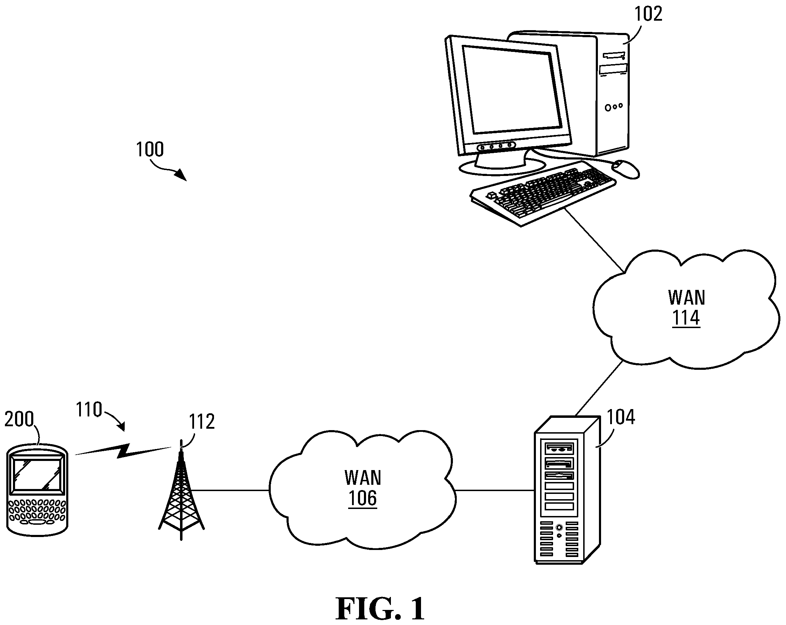

**FIG. 1** shows a schematic diagram depicting a typical networked environment **100** in which an exemplary handheld device **200** may be used. Networked environment **100** includes a desktop computing device **102,** a server computer **104,** a wide area network (WAN) **106,** a communications network **110** and handheld device **200.** Server **104** includes email server software, and is interconnected with a desktop computer **102** through a local area network (LAN) **114.** Server **104** additionally includes software that facilitates access to the email server software by handheld device **200.**

A radio frequency (RF) base station **112** provides a communication link between WAN **106,** which may be the public Internet, and a communications network **110,** which may be a wireless network. Handheld device **200** accesses data from server **104** or desktop computer **102** through the communications network **110** and WAN **106.** In some network architectures, a firewall may be implemented between WAN **106** and server computer **104** to gate access to LAN **114,** which may be a corporate LAN.

Handheld device **200** is loaded with email client software that accesses email messages stored in mail server software (such as Microsoft Exchange or Lotus Domino software) running on server **104.** To facilitate data access by handheld device **200,** server **104** may be loaded with specialized software to provide compression and encryption of data and a data interface with the mail server software.

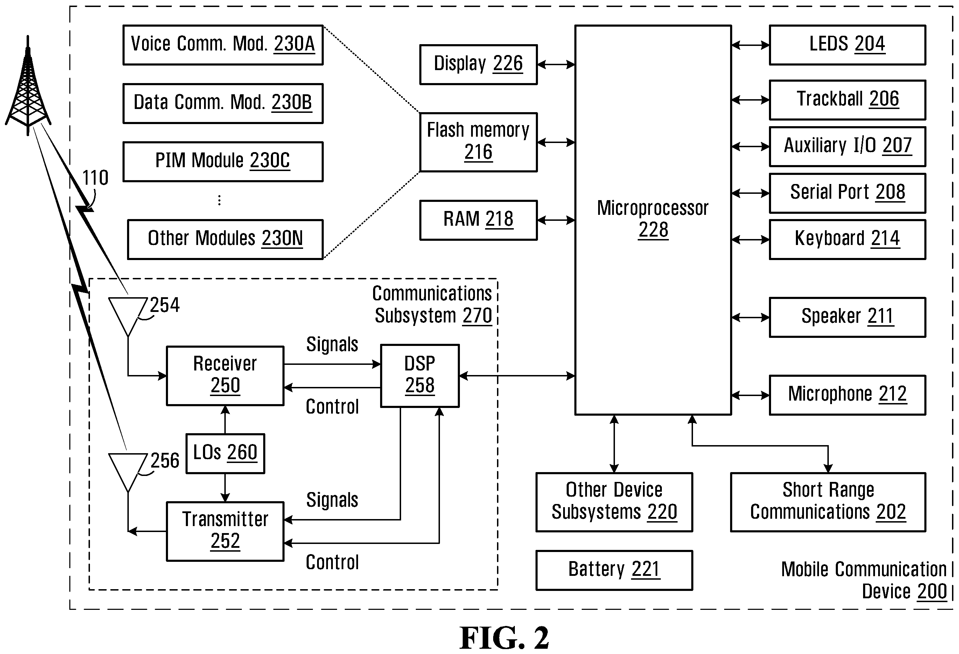

**FIG. 2** is a schematic diagram of exemplary handheld mobile communication device **200.** Device **200** includes a housing, an input device (keyboard **214**), and an output device (display **226**), which may be a full graphic Liquid Crystal Display (LCD). Other types of output devices may alternatively be utilized. A processing device (microprocessor **228**) is shown schematically in **FIG. 2** as coupled between the keyboard **214** and the display **226.** The microprocessor **228** controls the operation of the display **226,** as well as the overall operation of the handheld device **200,** in response to actuation of keys on the keyboard **214** by a user.

The housing may be elongated vertically, or may take on other sizes and shapes (including clamshell housing structures). The keyboard may include a mode selection key, or other hardware or software for switching between text entry and telephony entry.

In addition to the microprocessor **228,** other parts of the handheld device 200 are shown schematically in **FIG. 2****.** These include: a communications subsystem **270;** a short-range communications subsystem **202;** the keyboard **214** and the display **226,** along with an input entry device such as a track ball **206** and other auxiliary input/output devices **207,** a serial port **208,** a speaker **211** and a microphone **212;** as well as memory devices including a flash memory **216** and a random access memory (RAM) **218;** and various other device subsystems **220.** As is known, track ball **206** may be rotated to provide scrolling and pressed to allow selection. The handheld device **200** has a battery **221** to power the active elements of the handheld device **200.** The handheld device **200** is preferably a two-way radio frequency (RF) communication device having voice and/or data communication capabilities. In addition, the handheld device **200** may have the capability to communicate with other computer systems via the Internet.

Operating system software executed by the microprocessor **228** is preferably stored in a persistent store, such as the flash memory **216,** but may be stored in other types of memory devices, such as a read only memory (ROM) or similar storage element. In addition, system software, specific device applications, or parts thereof, may be temporarily loaded into a volatile store, such as the RAM **218.** Communication signals received by the handheld device **200** may also be stored to the RAM **218.**

The microprocessor **228,** in addition to its operating system functions, enables execution of software applications on the handheld device **200.** A predetermined set of software applications that control basic device operations, such as a voice communications module **230A** and a data communications module **230B,** are installed on the handheld device **200** during manufacture. The data communications module **230B** allows the handling of email messages. In addition, a personal information manager (PIM) application module **230C** is also installed on the handheld device **200** during manufacture. The PIM application is capable of organizing and managing data items, such as e-mail, calendar events, voicemails, appointments, and task items. The PIM application is also capable of sending and receiving data items via wireless network **110.** The data items managed by the PIM application are seamlessly integrated, synchronized and updated via the wireless network with the device user's corresponding data items stored or associated with a host computer system. As well, additional software modules, illustrated as other software modules **230N,** may be installed during manufacture.

Communication functions, including data and voice communications, are performed through the communication subsystem **270,** and possibly through the short-range communications subsystem **202.** The communication subsystem **270** includes a receiver **250,** a transmitter **252** and one or more antennas, illustrated as a receive antenna **254** and a transmit antenna **256.** In addition, the communication subsystem **270** also includes a processing module, such as a digital signal processor (DSP) **258,** and local oscillators (LOs) **260.** The specific design and implementation of the communication subsystem **270** is dependent upon the communication network in which the handheld device **200** is intended to operate. For example, the communication subsystem **270** of the handheld device **200** may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, Personal Communications Service (PCS), Global System for Mobile Communications (GSM), etc. Other types of data and voice networks, both separate and integrated, may also be utilized with the handheld device **200.**

Network access requirements vary depending upon the type of communication system. For example, in the Mobitex™ and DataTAC™ networks, handheld devices **200** are registered on the network using a unique Personal Identification Number (PIN) associated with each device. In GPRS networks, however, network access is associated with a subscriber or user of a device. A GPRS device therefore requires a subscriber identity module, commonly referred to as a Subscriber Identity Module (SIM) card, in order to operate on a GPRS network.

When required network registration or activation procedures have been completed, the handheld device **200** may send and receive communication signals over the communication network **110.** Signals received from the communication network **110** by the receive antenna **254** are routed to the receiver 250, which provides for signal amplification, frequency down conversion, filtering, channel selection, etc., and may also provide analog to digital conversion. Analog-to-digital conversion of the received signal allows the DSP **258** to perform more complex communication functions, such as demodulation and decoding. In a similar manner, signals to be transmitted to the network **110** are processed (e.g., modulated and encoded) by the DSP **258** and are then provided to the transmitter **252** for digital to analog conversion, frequency up conversion, filtering, amplification and transmission to the communication network **110** (or networks) via the transmit antenna **256.**

In addition to processing communication signals, the DSP 258 provides for control of the receiver **250** and the transmitter **252.** For example, gains applied to communication signals in the receiver **250** and the transmitter **252** may be adaptively controlled through automatic gain control algorithms implemented in the DSP **258.**

In a data communication mode, a received signal, such as a text message or web page download, is processed by the communication subsystem **270** and is input to the microprocessor **228.** The received signal is then further processed by the microprocessor **228** for an output to the display **226,** or alternatively to some other auxiliary I/O devices **207.** A device user may also compose data items, such as e-mail messages, using the keyboard **214,** an input entry device such as a track ball **206** and/or some other auxiliary I/O device **207,** such as a touchpad, a touch screen, a thumbwheel, a joystick, a rocker switch, or some other type of input entry device. The composed data items may then be transmitted over the communication network **110** via the communication subsystem **270.**

In a voice communication mode, overall operation of the device is substantially similar to the data communication mode. However for voice communication a speech encoding step is involved at the transmitter and correspondingly a speech decoding step occurs at the receiver. At the transmitter, after analog-to-digital conversion of the output of microphone **212,** digital voice samples are encoded by a speech coder before being modulated for transmission. In GSM networks for example, a GSM AMR (Adaptive Multi Rate) speech coder may be used to encode audio data for network transmission. Similarly, at the receiver, the network-encoded audio data may be decoded using the corresponding GSM AMR decoder. After the audio data is decoded, it is then converted to an analog signal by a digital-to-analog converter and output to a speaker, such as speaker **211.** Variants such as Adaptive Multi Rate - Wide Band (AMR-WB) compliant speech coders may also be used in GSM networks. Other speech codecs, compliant to a suitable standard defined for the particular underlying voice and data communication network **110,** may of course be used. Suitable speech codecs for a given voice and data communication network would be known to persons skilled in the art.

At the transmitter, audio signals are usually generated by a microphone **212.** Alternative voice or audio I/O subsystems, such as a voice message recording subsystem, may also be implemented on the device **200.** In addition, the display **226** may also be utilized in voice communication mode, for example, to display the identity of a calling party, the duration of a voice call, or other voice call related information.

The short-range communications subsystem **202** enables communication between the handheld device **200** and other proximate systems or devices, which need not necessarily be similar devices. For example, the short-range communications subsystem may include an infrared device and associated circuits and components, or a Bluetooth™ communication module to provide for communication with similarly-enabled systems and devices.

Handheld device **200,** when operating under the control of known software, may be used to access voicemail messages from a conventional voicemail system provided by a network provider. The software may include device code (firmware), operating system software and a suite of software applications and processes.

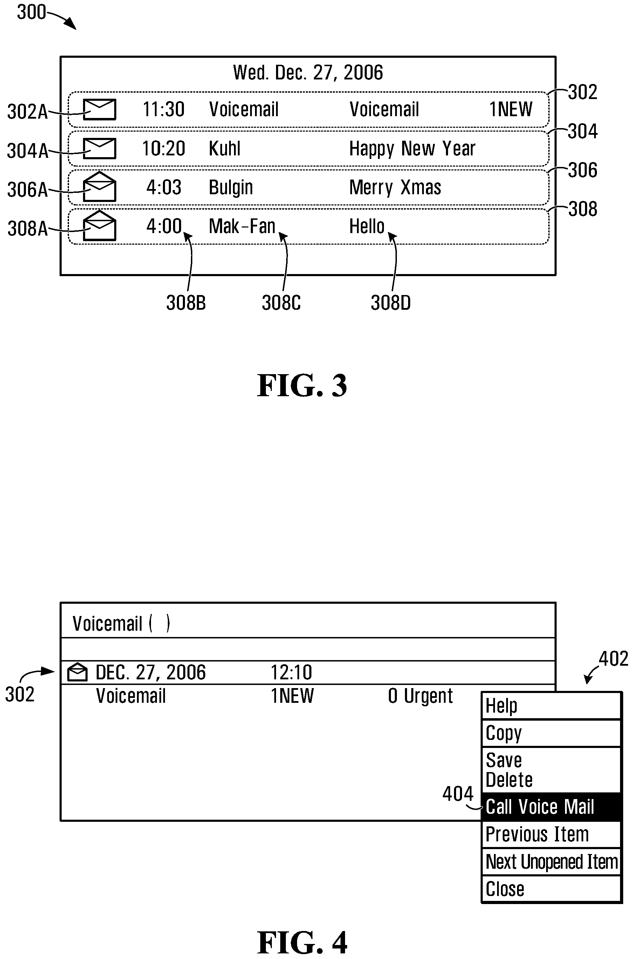

Typical steps taken by a user of a handheld device **200,** to access voicemail messages from a conventional voicemail system are illustrated in **FIGS. 3-5****.** Variations in the depicted sequence of actions, such as the use of voice commands instead of keyboard keys, or changes in the order of steps, are possible.

**FIG. 3** depicts an exemplary typical user interface message screen **300** used on handheld device **200.** Icon **302A** visually indicates a record **302** for a voicemail message; icon **304A,** a record **304** for a replied to email message; icon **306A,** a record **306** for an opened email message; and icon **308A,** a record **308** for an unread email message. Icon **302A** and the title of message record **302,** indicate that the message is a voicemail message (as opposed to an email or text message for example).

In addition to the icons, message records may contain other fields which provide information such as a time of arrival field, a sender identification field and a subject field. For example message record **308** contains a time field **308B,** email sender id field **308C** and a title or subject field **308D** associated with the message corresponding to message record **308.**

The user may bring up a pop-up menu screen **402** as depicted in **FIG. 4****,** by using track ball **206** after opening message record **302** and navigate through the menu screen **402** to make a selection of a menu entry **404** using the track ball **206.** It is noted that other input entry devices such as keyboard **214,** or a touchpad, touch screen, joystick or the like may also employed to call up the menu screen **402** or navigate or make a selection of a menu entry **404.** When menu entry **404** of popup menu **402** labeled "Call Voice Mail" is selected, the handheld device **200** makes a call to a conventional voicemail system provided by the wireless network provider. There is typically a dedicated phone number that is dialed to access the voicemail mailbox used by the particular handheld device **200** when entry **404** is selected.

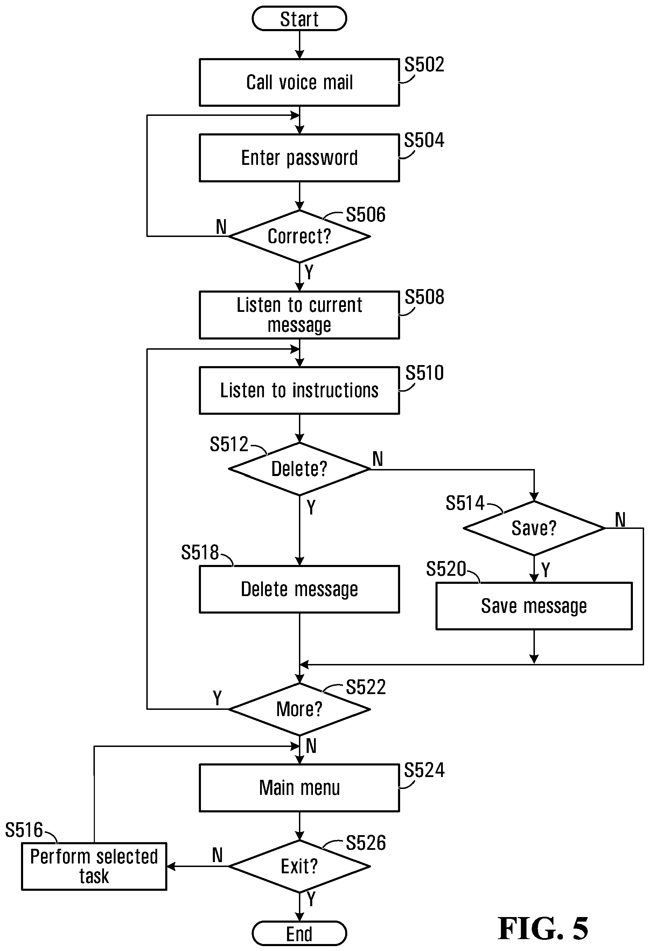

**FIG. 5** depicts a flowchart illustrating typical steps taken by a user operating a handheld device **200** to access his or her messages stored in a conventional voicemail system.

The user first calls into the telephone network using a wireless handheld device **200** (**S502**). This is done by dialing a number associated with his voicemail mailbox. Once the call successfully connects into the voicemail system, the user then supplies his password when prompted (**S504**).

All data entry is typically done using keys on a touchtone phone keypad. Data is presented to the user, via voice commands, through the speaker of the handset of handheld device **200.** If the password is incorrect (**S506**) it must be re-entered (**S504**).

The user listens to the current message (**S508**). After hearing the current message, the user may listen to instructions (**S510**) and either press a key on an input entry device (e.g. pressing the track ball **206** or keyboard **214** or the like) to delete the message (**S512, S518**); press a different key to save the message (**S514, S520**) or simply skip the message. If more voicemail messages are available on the voicemail system (**S522**), the process may revert to **S510.** At **S524** a "main menu" may be invoked. The user may perform the selected task (**S516**) such as setting configuration parameters, recording a greeting or setting the number of times a call should ring before going to the voicemail system. Alternately, the user may choose to listen to messages again starting at **S510** using options in the main menu (**S524**).

Although, various conventional systems differ in their implementation, the use of a touchtone key and inspection of messages one-by-one is the norm in conventional voicemail systems. It is instructive to note that the user may call into the voicemail using an ordinary telephone handset and a traditional land-based telephone line instead of a wireless handheld device. Thus the voicemail system neither requires nor takes advantage of the many advantageous features in wireless handheld devices. Moreover, the voicemail system takes for granted the availability of a connection, which may not be the case when using wireless handhelds. If the user is not in a location that permits wireless communication and cannot access a land line, his voice messages are inaccessible. This is very undesirable, as the messages have already been stored. The voicemail thus achieves location independence at the cost of requiring a new wireless network connection, just for the purpose of accessing a stored message.

The lack of a visual interface to guide a user through the steps of **FIG. 5** is also disadvantageous. In sharp contrast to other messaging applications that make full use of the screen provided on a handheld device such as email or text messaging, the user is not able to see at a glance information about the nature of voicemail messages, such as when a message was received, who may have sent it or the length of the message.

Moreover, as will be apparent from **FIG. 5** the user must go though voicemail messages sequentially, inputting commands to indicate preferred actions such as whether to listen to the message, skip it, delete it or store it.

As the user cannot see an organized presentation of meta data (such as sender name or phone number, arrival time, or length) for the voicemail messages, the user cannot easily select desired messages to access - particularly when a large number of voicemail messages are present. Time is wasted considering each message sequentially and deciding whether to store, skip or delete it. Specifically, some time elapses as the user listens to at least some portion of the message before moving on to the next, even when deciding not to listen to the entire voice message.

Additionally, there is no way to easily see which messages are received from the same sender, and how long the messages may be.

The user is also not able to see voice messages that he may have left for others. It would be very advantageous to be able to see the interrelationships between messages received and messages sent as some of the sent and received messages may form a chain, or a thread.

To overcome these and the other related disadvantages noted above, an exemplary embodiment of a voicemail system incorporates an answering machine on handheld device **200.**

To operate handheld device **200** as an answering machine, in one embodiment, microprocessor **228** stores network-encoded audio data received through communication subsystem **270** and voice communication module **230A,** in local memory (e.g., RAM **218,** flash memory **216** or a new block of memory). As noted above, the format of the network-encoded audio data would be compliant with a suitable standard defined for the voice and data communication network **110** used. In an exemplary embodiment, an AMR-WB encoded audio data compliant to the ITU-G.722.2 standard, may be received over a GSM voice and data communications network and stored in local memory.

During playback of recorded audio messages, microprocessor **228** may be used to decode network-encoded audio stored in local memory and output the decoded audio message through speaker **211.**

In another embodiment, handheld device **200** may be loaded with separate audio codec software different from the speech codec used for network-encoded audio data. The audio coder portion of the codec software may be used to encode either decoded audio data received via the communication system **270** or raw digital audio data from microphone **212** in a compressed format suitable for storage (rather than transmission). The audio decoder may be used to decode compressed audio data encoded by the audio encoder and output the resulting audio to interconnected speaker **211.**

In an alternate embodiment of the above, the audio codec may be formed as a dedicated hardware module (not shown), coupled to local memory (RAM **218,** flash memory **216** or a new block of memory), microprocessor **228,** communication system **270,** microphone **212,** and speaker **211,** and incorporated into handheld device **200** to reduce the computational load on microprocessor **228.** The audio coder may employ a compression engine to reduce the size of audio files written to local memory. Most audio compression schemes discard some data from raw digitized audio input to reduce the amount of memory required to store the audio data. When a compression engine is used by a codec, a corresponding decompression engine should used by the decoder to play back the audio. Audio codecs that use standardized compression/decompression techniques are well known in the art. The audio coder may thus accept decoded audio after the network-encoded audio data is decoded by a speech decoder (e.g., AMR-WB decoder) and compress the decoded audio data into a format suitable for storage in local memory. Conversely, the audio decoder may read compressed audio data from memory, decompress and output the corresponding audio signal to speaker **211.**

Many file formats suitable for storing audio are known. Examples include MP3, WAV, AIFF and WMA formats. MP3 denotes the moving pictures expert group (MPEG) audio layer 3 standard, and has become extremely popular with users of personal computers and portable digital music players. WAV is short for waveform audio format, while the WMA stands for Windows Media Audio format which is a popular but proprietary standard. AIFF stands for the Audio Interchange File Format and is often used to store uncompressed audio data on personal computing devices.

In yet another embodiment, incoming network-encoded audio data is first decoded and then stored in local memory in a format suitable for outputting to speaker **211** after digital-to-analog conversion.

In operation, handheld device **200** may receive, store and present voicemail messages. The presentation may be very similar to the presentation of other messages such as emails, short messaging service (SMS) messages - also known as text messages - or multimedia messaging service (MMS) messages.

After a handheld device **200** rings for a predetermined (configurable) number of times, handheld device **200** enters answering-machine mode. Once handheld device **200** enters answering-machine mode, the caller is prompted to leave a message. If the caller proceeds to leave a message, microprocessor **228** may store the incoming message in local memory. The incoming message may be stored as network-encoded audio data (e.g., AMR-WB encoded data), or as decoded raw audio data suitable for digital-to-analog conversion; or as an audio file after decoding the received network-encoded audio and re-encoding the audio data (e.g., an MP3 file).

Handheld device **200** may alternately enter answering-machine mode if the user chooses to ignore an incoming call (by appropriate selection from a menu that may pop up on receipt of a new call) or if the user configures device settings on the handheld device **200** so that upon reception of a phone call, handheld device **200** automatically enters answering-machine mode. Various other methods of entering answering-machine mode will be apparent to those of ordinary skill in the art.

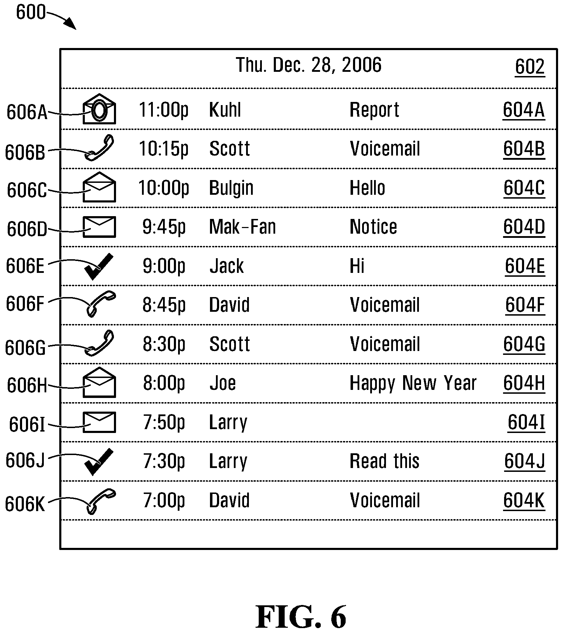

Once the caller leaves a message and hangs up, a message record associated with the incoming message (stored as an audio file) may be created by microprocessor **228** and displayed to the user in a user interface screen **600** shown in **FIG. 6****.** Optionally, where a user calls out and leaves a voicemail message on a remote voicemail system, an outgoing message record may be created. In addition, microprocessor **228** may concurrently record the outgoing message in local memory of the handheld device **200.**

In the depicted exemplary embodiment, the presentation of a voicemail message looks very similar to the presentation of an email message received using email client software. Title bar **602** displays the date. Each message record **604A, 604B, 604C** ... **604K** (individually and collectively message records 604) represents a message which may be an email, SMS message or voicemail. Information regarding the sender, recipient, and time of arrival may be shown in a corresponding field in each record.

Each icon **606A, 606B, 606C** ... **606K** (individually and collectively icons **606**) which is part of a message record may be designed so as to indicate the type and status of the associated message. For example, unread emails may be indicated by a closed envelope icon **606D,** while those that have been read may show an opened envelop icon **606C.** Those with attachments may be indicated by an icon such as icon **606A** showing an image of a paper clip. A voicemail message received and stored on the handheld device **200** may be represented by an icon **606F,** such as a downwardly drawn handset while a different icon **606B** with a similar look and feel (e.g., an upwardly drawn handset) may represent a message left by the user of the handheld device **200** on a recipient's remote voice mailbox.

To access voice messages, the user selects or opens a message record containing a voicemail message. For example, selecting message record **604F** causes the stored audio message associated with message record **604F** to be decoded as necessary, converted to an analog signal and output to speaker **211** by microprocessor **228.** Where handheld device **200** employs a separate audio codec, the corresponding audio decoder may be involved in decoding the audio message from memory prior to outputting it to speaker **211.** Once the voicemail message audio file is played, the corresponding icon may change to reflect that the voicemail message has already been played. For example, an icon may appear red if not yet played and green if previously displayed. Configuration options may also be provided for the user to manually change the icon associated with the state of a voicemail message as desired.

Advantageously, opening a message record corresponding to an outgoing voicemail (e.g., message record **604B**) plays the stored audio file, thereby allowing the user to hear the outgoing message left on a remote voicemail system.

Consider the scenario where a caller (e.g., David) leaves a message for the user (e.g., Scott) of handheld **200** at time t1 (e.g., at 7:00PM). This is shown in message record **604K** of **FIG. 6****.** The user then calls back and leaves a message at the original caller's (David's) voicemail box at time t2 (e.g., at 8:30PM) as shown in message record **604G** of **FIG. 6****.** The original caller (David), after receiving the message, again calls. However, the user does not answer and the handheld device **200** goes to answering-mode. Hence, the caller (David) leaves a message at time t3 (e.g., 8:45PM) as shown in message record 604F of **FIG. 6****.** The user then calls again at time t4 (e.g., 10:15PM) as depicted in message record **604B.** These exchanges take place within the context of other message exchanges such emails and SMS messages being received and sent in the intervals between times t1, t2, t3, and t4.

As already seen, in one exemplary embodiment, the messages may be arranged as depicted in **FIG. 6****,** chronologically - in their order of arrival or transmission. In alternate embodiments however, the messages may be presented as threads showing the interrelationships between messages.

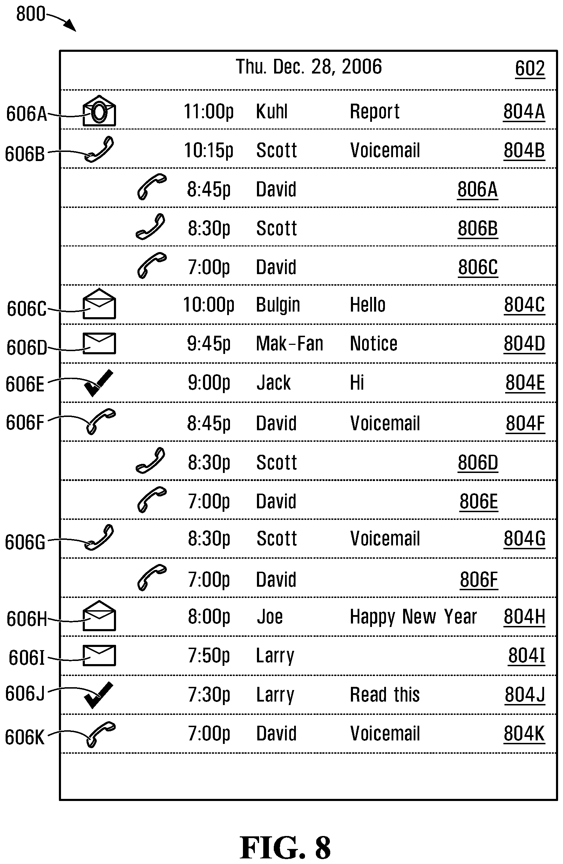

Accordingly, **FIG. 8** displays a different presentation of a user interface for the messages shown in **FIG. 6** which depicts audio message associations or interrelationships in scenarios such as the voicemail exchanges described above.

User interface screen **800** includes message records **804A, 804B, 804C** ... **804K** (individually and collectively message records 804) each with its corresponding icon **604A, 604B, 604C** ... **604K** respectively. Some message records, such as message record **804B,** have message sub-records **806A, 806B,** and **806C** which are listed under (or, more generally, positioned adjacent to) their 'parent' message record **804B.** Message sub-records **806A, 806B,** and **806C** may be presented indented with respect to their parent message **804B,** to show the association. In the particular embodiment depicted, a message sub-record is also shown as a message record in its own right. For example, message record **804F** is the same as message sub-record **806A.**

It is worth noting that the message contents stored in handheld device 200 are the same in both **FIG. 6** and **FIG. 8****.** Hence icons **606** as well as the fields (i.e., subject, sender, recipient, time and the like) associated each message record **804A, 804B, 804C** ... **804K** are the same in both cases. However, in **FIG. 8** the interrelationship of the voicemail messages is more readily apparent to a viewer.

In the above noted scenario of voicemail exchanges, the first voicemail message received at time t1 (7:00PM) is displayed in message record **804K.** As will become apparent, the same voice message also corresponds to message sub-records **806E, 806F** and **806C.** After the user calls back and leaves a message at time t2 (8:30PM), a new message record **804G** is displayed. As the previous message (corresponding to message record **804K**) is related to the current message, a new message sub-record **806F** is created and shown below message record **804G.** Message sub-records are indented to show the relation visually to the parent message record. Thus it is clear, for example, that sub-record **806F** is related to message record **804G.**

When the user again receives an incoming voice message at time t3 (8:45PM), the received voicemail message is shown as message record **804F.** The previous related messages are also shown as message sub-records **806D, 806E** (corresponding to message records **804K, 804G** respectively).

The next call from the user at time t4 (10:15PM) is shown as message record **804B.** Again, the previous related messages are also shown as message sub-records **806A, 806B, 806C** (corresponding to audio message records **804K, 804G, 804F,** respectively).

Advantageously, in **FIG. 8****,** audio message record **804B** and its message sub-records **806A, 806B** and **806C** are visually depicted in a manner that clearly illustrates the sequence of voicemail messages - or the thread of exchanges.

It will be appreciated that wireless connectivity is not required to access the messages. Voice messages are instead accessed by simply selecting or opening a message record. Selecting a message sub-record **806A, 806B, 806C, or 804K** plays the same audio file that would be opened by selecting its corresponding message record. For example selecting message sub-record **806C** opens the same audio file as selecting message record **804K.** In other words, one message file may be associated with a message record as well as multiple message sub-records.

Displaying the messages of **FIG. 6** as voicemail threads as shown in **FIG. 8** entails associating outgoing and incoming message records to form appropriate message groups that should appear together in a given thread.

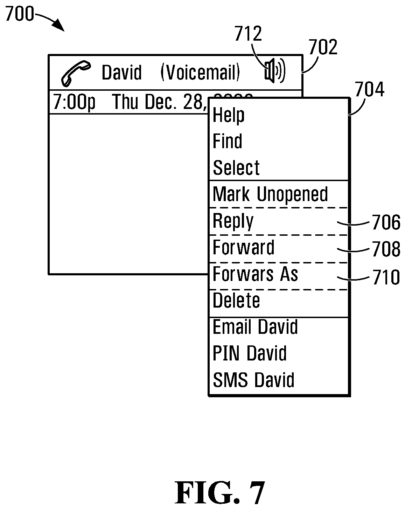

For example, the outgoing voice message at time t2 (of record **604G**) may be associated with the incoming message at time t1 (of record **604K**) as follows. When the user opens message record **604K** a user interface screen **700** depicted in **FIG. 7** may be displayed. User interface screen **700** may include a window **702** with an icon **712** indicating that a voicemail audio message is being played back. Window **702** may also include information available in message record **604K** such as caller identification, and time of receipt of the audio message. While, and after, the user listens to the recorded audio message, a context based menu **704** may be displayed. Menu **704** may alternately be invoked using track ball **206.** Menu **704** may include selections enabling the user to reply to the caller (e.g. selection **706**), forward the audio message to another phone recipient (selection **708**), or forward the audio message as an email attachment (selection **710**), respectively. The user can navigate through the menu **704** using the track ball **206** and select a selection **706, 708,** or **710.** For example, if the user (Scott) chooses to reply to the caller (David) via selection **706** and connects to the original caller's (David's) remote voicemail, then microprocessor **228** may concurrently record the network-encoded outgoing message in local memory as it is left on the remote voicemail (at time t2) and create an outgoing message record **606G** for it. If a separate audio codec is employed, the outgoing message may instead be recorded using a desired file format such as WAV or MP3 or the like. Outgoing message record **606G** is then associated with incoming message record **604K.**

Connection to a remote voicemail system may be detected by handheld **200** using answering machine detection (AMD) software executing on its DSP **258** or microprocessor **228.** Answering machine detection software may utilize DSP algorithms to analyze the received voice response to determine if the source is a live person or an answering machine. For example a live person typically answers by a short greeting such as "Hello" or "David speaking" while an answering machine or a voicemail system typically uses a much longer, more informative greeting such as "You have reached the voicemail of David. Please leave a message after the beep". Such differences may be exploited by AMD software to identify a remote voicemail.

It is also necessary to associate incoming message records with existing outgoing message records. In this regard, the following approach is suitable if the handheld device **200** of only one party to the call is fitted with the exemplary software.

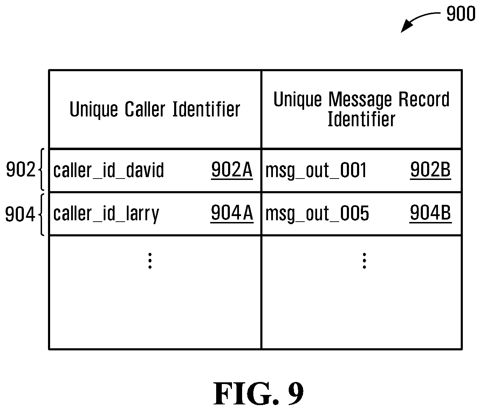

The handheld device **200** may store a unique caller id (such as a phone number or a personal identification number) and a corresponding unique message id (identifying the last outgoing message to the caller) in a database. An exemplary database **900** is depicted in **FIG 9****.** Each message record (in **FIG. 6** or **FIG. 8**) would have a unique message id (e.g., **902B** or **904B**) assigned to it. Each caller would also have a unique caller id (e.g., **902A** or **904A**)**.** The database may be a simple table formed in memory, a text file, a simple relational database management system (RDBMS) or the like. Each database entry **902** (or **904**) thus contains a unique caller id **902A** (or **904A**) and the last outgoing message record id **902B** (or **904B**) awaiting a reply.

For example, entry **902** may contain a unique identifier **902A** (caller_id_david) for David and a message record identifier **902B** (msg_out_001) identifying the last outgoing message left by Scott for David. Subsequently, if an incoming call passes to voicemail and a message is recorded, database **900** is inspected to see if the incoming message originated from a recipient for whom an outgoing message had been left previously. That is, callers from whom an incoming message is expected would have corresponding entry **902,** or **904** in database **900.** If the caller is found in the database then an association is made between the last outgoing message record (whose message record id is stored in the database) and the new incoming message record.

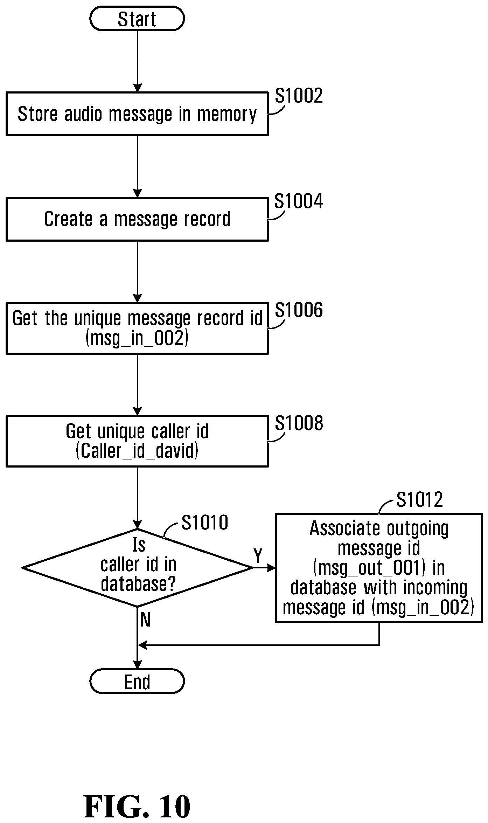

**FIG. 10** depicts a flowchart outlining the actions taken by a handheld device **200** as an incoming call is passed to the voicemail system. After the voicemail message is recorded (**S1002**) an incoming message record is created for it (**S1004**). A unique message record id (e.g. msg_in_002) is then obtained **(S1006)** for the just recorded message. Similarly a unique caller id (e.g. caller_id_david) is obtained that uniquely identifies the caller (**S1008**). The database **900** is then queried (**S1010**) to determine if there is an entry containing the unique caller id (caller_id_david). If so, (**S1012**) an association is made between the outgoing message id in database **900** (e.g. msg_out_001) and the new incoming message id (msg_in_002). If no entry is found in the database **900** the new message would not be associated with an existing thread (**S1012**).

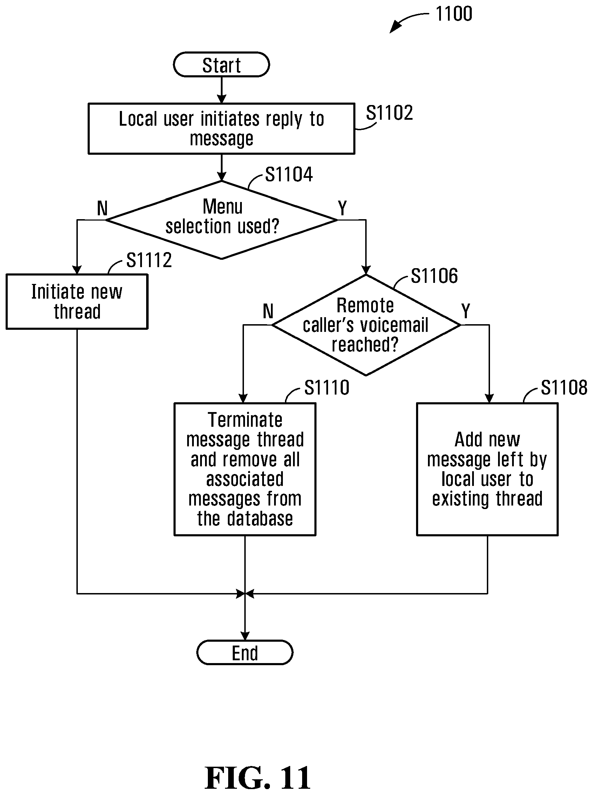

**FIG. 11** depicts a flowchart outlining the actions **1100** taken by a handheld device **200** when the handheld user replies to a message. If the local handheld user initiates a reply to a message (**S1102**) using a menu selection (**S1104**) and reaches the remote caller's voicemail (**S1106**), then the thread containing the message is extended by adding the new message left by the handheld user (**S1108**). If, instead, the call is answered by the remote recipient in person (as may be detected by, for example, using AMD software), the thread containing the message is terminated and all of the messages associated with the thread are removed from the database (**S1110**). For example, if a call by the handheld user (Scott) is answered by the remote recipient (David), the entry **902** (**FIG. 9**) containing the outgoing message record id (**902B**) for David is removed from database **900.** Subsequent incoming or outgoing voice messages to/from the remote caller (David) may then initiate a new thread.

If the local handheld user calls a recipient in reply to a message but without using a menu option to initiate the reply (**S1104**), then the existing thread would not be extended and a new thread would instead be initiated (**S1112**). Upon a subsequent reply by the remote caller, if the local handheld user picks up, then when the call is ended the handheld device **200** may present a menu selection of all active threads containing the remote caller's id and allow the local handheld user to terminate any existing thread.

In yet another embodiment, the remote caller may be prompted to enter a subject for the message being left on the local device. Threads would then be maintained based on subject, each message record in a thread corresponding to the same subject. Any new message would then be easily added to the appropriate thread, using its subject.

In a variation of the above exemplary embodiment, a speech-to-text conversion engine may be employed to save text data corresponding to incoming or outgoing messages. The text may be analyzed to determine an appropriate subject corresponding to each message record. The subject, so determined, may then be used to create or select an existing thread into which a new incoming or outgoing message record may be added. If no appropriate subject is found, then a new thread may be created.

In yet another simplified embodiment, the association of messages to form threads may be determined by comparing the originating phone number of an incoming message with the destination phone number of an outgoing message. For example, in **FIG. 6** the caller's (i.e., David's) phone number of the message at time t1 is the same as the destination (i.e., David's) phone number of the message at time t2. In view of this match, message record **606G** is associated with message record **604K.** When the caller subsequently leaves a message at time t3, the originating phone number (David's phone number) may again be used to associate message record **606F** with message record **606G.** Once message records are associated as just described they may be presented as threads showing their interrelationships.

If both the local and remote handheld devices are operated using exemplary device code and software as disclosed herein, then message association data between an incoming message being left on a handheld device **200** and a previously recorded outgoing message, may be exchanged using voice communications module **230A** (in-band) or using data communications module **230B** (out of band). Thus in **FIG. 6****,** when both handheld devices are equipped with suitable exemplary software, a current incoming message record (e.g. **606F**) may be associated with a previously recorded outgoing message record (e.g. **606G**) using exchanged message association data. In one embodiment, message association data may include unique message record identifiers to be associated. In this case, a given voicemail message may have an outgoing message record with a unique message record id (on the local handheld device). The same message would be recorded as an incoming message record with a unique message record id in the remote handheld device. These two message record ids may be associated. Alternately, the outgoing message record id on the local handheld device may be the same as the incoming message record id on the remote handheld device. In other words, while a message record id is unique in a given (local) device, it may be also in use by another (remote) handheld device to facilitate association of messages.

In one in-band implementation, the beep at the end of a voicemail prompt may be a unique sound or a series of tones, advertising the fact that the handheld device **200** is operating using the before described device code and its software supports voicemail threading. Upon detecting such unique tones, the calling handheld device **200** may be prompted to transmit message association data for the current message being left on the voicemail system.

If both the calling and recipient handheld devices are operated using exemplary device code and software as disclosed herein, the recipient handheld device **200** may transmit (in-band) another unique sound or series of tones when prompting for a message, to advertise the fact that its voicemail system is being used. The unique sound or tones allow the calling handheld device **200** to easily determine that it is connected to a remote voicemail system, thereby avoiding the need for answering machine detection software. Alternately, the recipient handheld device **200** may transmit out-of-band data to the calling handheld device 200 to announce that the recipient handheld device **200** is in answering-machine mode.

In alternate embodiments, threads may be displayed differently from the arrangements depicted in **FIG. 6** and **FIG. 8****.** For instance, the thread ending with the most recent voicemail message may be the only thread shown for the sub-records of the thread. Such presentation options may be provided as preference settings on handheld device **200.** For example, in **FIG. 8****,** both message record **804F** and sub-message record **806A** correspond to the same incoming audio message (from David at 8:45PM). Thus, in an alternate embodiment, only message sub-record **806A** may be shown while omitting message record **804F.**

One of the advantages of the embodiments described above is the cost savings in using handheld device **200** as an answering-machine in lieu of having a voicemail service contract with the network provider. Network provided voicemail service has an associated periodic fee (usually charged monthly) which may be conveniently eliminated by the use of an audio codec in handheld device **200** to record and playback messages.

Furthermore, the user of handheld device **200** can easily choose which audio messages to listen to without the cumbersome practice of having to listen to voice instructions and key in answers. Using the embodiments described, a voice message may be treated like any other message such as an email or a text message. Voicemail messages can thus be forwarded by email, or stored onto a removable media such as CD or USB memory card or the like. In addition, since voicemail messages are stored as files, a user may conveniently skip ahead or back to anywhere within the voicemail message and listen to any portion of the recorded audio message.

As shown in **FIG. 6** and **FIG. 8****,** it is clear that the phone number of a caller can be substituted by caller identification. The caller identification may come from a calling party name display (CPND) service provided by the network or from a translation by the address book of the handheld device **200.** This allows more intelligible or friendly names to be displayed in each audio message record (**FIG. 6****,** **FIG. 8**) rather than phone numbers. In yet another exemplary embodiment, the speech-to-text conversion engine can scan the voicemail message and extract specific data relating to caller identification such as the telephone number of the caller. Alternatively, the specific data may be mapped to other information in memory **216** such as the address book. For example, a telephone number in a voicemail message extracted by the speech-to-text conversion engine can be compared with the contact list in memory **216** to determine the caller identification associated with the telephone number in the contact list and display the caller identification in sender id field **308C** as depicted in **FIG. 3****.**

Various options to display either full formal names, nick names, phone numbers or the like are known and may be instituted for the voicemail system as disclosed in the embodiments above.

Of course, the above described embodiments are intended to be illustrative only and in no way limiting. The described embodiments are susceptible to many modifications of form, arrangement of parts, details and order of operation. The disclosed embodiments are rather intended to encompass all such modification within the scope, as defined by the claims.

## Claims

1. A method of providing a voicemail service at a handheld wireless device (200), comprising:
recording an incoming audio message in a local memory (218) of said handheld device (200); and
displaying an incoming audio message record, corresponding to said incoming audio message, in a user interface screen of said handheld device (200), said user interface screen contemporaneously presenting email message records along with said incoming audio message record;
placing a call to a recipient;
automatically detecting that said call is answered by a remote voicemail system;
transmitting an outgoing audio message to said remote voicemail system; and
recording the outgoing audio message for said call in said local memory (218), which results in an outgoing message record;
selectively grouping said outgoing message record with said incoming message record; and
displaying in said user interface screen said outgoing message record for said call.

2. The method of claim 1, further comprising, upon selection of said incoming audio message record through said user interface screen of said handheld device (200), playing back said incoming audio message recorded in said local memory (218) through a speaker (211) of said handheld device (200).

3. The method of claim 1, further comprising:
comparing a phone number called to leave said outgoing audio message with an originating phone number associated with said incoming audio message record and upon a match, grouping said outgoing message record with said incoming message record.

4. The method of claim 1, wherein said remote voicemail system comprises a remote handheld device, said method further comprising exchanging message association data with said remote handheld device to group said outgoing message record with said incoming message record.

5. The method of claim 1, further comprising:
storing a first unique caller identifier corresponding to a recipient of said outgoing audio message in association with said outgoing audio message;
upon receiving a new incoming message, recording said new incoming message and creating a new message record, and comparing a second unique caller identifier for an originator of said new incoming message with said first unique caller identifier; and
on a match, grouping said outgoing message record with said new message record.

6. The method of claim 1, further comprising positioning said incoming audio message record corresponding to said incoming audio message on said screen adjacent to said outgoing message record.

7. The method of claim 1, wherein said incoming audio message record is visually presented as a sub-record of said outgoing message record corresponding to said outgoing audio message.

8. The method of claim 1 or claim 2, wherein said placing a call to a recipient comprises, upon a user selecting said incoming audio message record through said user interface screen, enabling said user to select to reply to an original caller of said audio message; and
upon said user selecting to reply, placing said call to said recipient,
wherein recording said outgoing audio message in said local memory (218) comprises, while said user leaves the outgoing audio message in said remote voicemail system, concurrently recording said outgoing audio message in said local memory (218);
the method further comprising:
grouping said outgoing message record with said incoming audio message record.

9. The method of any one of claims 1 to 8, wherein said incoming audio message record comprises a caller identification field.

10. The method of any one of claims 1 to 9, wherein said incoming audio message record comprises a time field.

11. The method of any one of claims 1 to 10, further comprising, upon receiving a phone call from a caller, placing said handheld device (200) in answering-machine mode prior to said recording said incoming audio message.

12. The method of claim 11, further comprising, entering said answering-machine mode upon receipt of a user input to ignore an incoming phone call.

13. The method of claim 11, further comprising, automatically entering said answering-machine mode responsive to a user setting, upon receipt of incoming phone calls.

14. The method of any one of claims 1 to 13, wherein said recording said incoming audio message comprises:
taking digital voice samples using an audio codec (230N) coupled to said local memory (218) and a wireless receiver (250) in said handheld device (200);
compressing said voice samples; and
writing compressed voice samples into said local memory (218).

15. The method of claim 14, wherein said compressed voice samples are written in said local memory (218) using MP3 audio file format.

16. The method of claim 14 or claim 15 when dependent upon claim 2, wherein said playing back comprises:
reading compressed voice samples from said local memory (218);
decompressing said compressed voice samples using said audio codec (230N); and
outputting said decompressed samples in said speaker (211).

17. The method of claim 16, wherein said audio codec (230N) comprises an MP3 player.

18. The method of any one of claims 1 to 17, wherein said user interface screen of said handheld device (200) also presents text message records along with said audio message record.

19. A handheld device (200) comprising:
a wireless receiver (250);
a speaker (211);
a memory (218);
a display (226);
a microphone (212); and
at least one processor (228, 258), comprising:
means to transition said device (200) to answering-machine mode and record an incoming audio message from said caller in said memory (218);
means to display an incoming audio message record corresponding to said audio message in a user interface screen on said display (226), said screen contemporaneously presenting email message records and said incoming audio message record;
means to detect that an outgoing call is answered by a remote voicemail system;
means to transmit an outgoing audio message to said remote voicemail system;
means to record in said memory (218) using said microphone (212), the outgoing audio message left on said remote voicemail system as an outgoing message record;
means to selectively group said outgoing message record with said incoming message record; and
means to display said outgoing message record corresponding to said outgoing audio message on said user interface screen.

20. The device of claim 19, wherein said at least one processor (228) further comprises means to play back said incoming audio message through said speaker (211) upon selection of said message record by a user.

21. The device of claim 19 or claim 2, further comprising an audio codec (230N).

22. The device of any one of claims 19 to 21, wherein said at least one processor (228) comprises means to display text message records contemporaneously with said incoming audio message record.

23. The device of any one of claims 19 to 22, wherein said at least one processor comprises a processor (228) and a digital signal processor 'DSP' (258) in communication with said processor (228).

24. The device of claim 23, wherein said DSP (258) is adapted to execute answering machine detection software.

25. A computer readable medium storing computer readable instructions executable by a processor (228) of a computing device (200) to cause said device (200) to implement the steps of the method of any one of claims 1 to 18.

## Patentansprüche

1. Verfahren zum Vorsehen eines Sprachnachrichtendiensts an einer handgehaltenen drahtlosen Vorrichtung (200), das aufweist:
Aufzeichnen einer eingehenden Audionachricht in einem lokalen Speicher (218) der handgehaltenen Vorrichtung (200); und
Anzeigen eines "eingehende Audionachricht"-Datensatzes, der der eingehenden Audionachricht entspricht, in einem Benutzerschnittstellenbildschirm der handgehaltenen Vorrichtung (200), wobei der Benutzerschnittstellenbildschirm gleichzeitig Email-Nachricht-Datensätze zusammen mit dem "eingehende Audionachricht"-Datensatz darstellt;
Tätigen eines Anrufs an einen Empfänger;
automatisches Erfassen, dass der Anruf durch ein entferntes Sprachnachrichtensystem beantwortet wird;
Senden einer abgehenden Audionachricht an das entfernte Sprachnachrichtensystem; und
Aufzeichnen der abgehenden Audionachricht für diesen Anruf in dem lokalen Speicher (218), was in einem "abgehende Nachricht"-Datensatz resultiert;
selektives Gruppieren des "abgehende Nachricht"-Datensatzes mit dem "eingehende Nachricht"-Datensatz; und
Anzeigen des "abgehende Nachricht"-Datensatzes für den Anruf in dem Benutzerschnittstellenbildschirm.

2. Das Verfahren gemäß Anspruch 1, das weiter aufweist, bei Auswahl des "eingehende Audionachricht"-Datensatzes durch den Benutzerschnittstellenbildschirm der handgehaltenen Vorrichtung (200), Wiedergeben der eingehenden Audionachricht, die in dem lokalen Speicher (218) aufgezeichnet ist, über einen Lautsprecher (211) der handgehaltenen Vorrichtung (200).

3. Das Verfahren gemäß Anspruch 1, das weiter aufweist:
Vergleichen einer Telefonnummer, die zum Hinterlassen der abgehenden Audionachricht angerufen wurde, mit einer Ursprungstelefonnummer, die mit dem "eingehende Audionachricht"-Datensatz assoziiert ist, und, bei einer Übereinstimmung, Gruppieren des "abgehende Nachricht"-Datensatzes mit dem "eingehende Nachricht"-Datensatz.

4. Das Verfahren gemäß Anspruch 1, wobei das entfernte Sprachnachrichtensystem eine entfernte handgehaltene Vorrichtung aufweist, wobei das Verfahren weiter ein Austauschen von Nachrichtassoziationsdaten mit der entfernten handgehaltenen Vorrichtung aufweist, um den "abgehende Nachricht"-Datensatz mit dem "eingehende Nachricht"-Datensatz zu gruppieren.

5. Das Verfahren gemäß Anspruch 1, das weiter aufweist:
Speichern eines ersten eindeutigen Anrufer-Identifizierers, der einem Empfänger der abgehenden Audionachricht entspricht, in Assoziation mit der abgehenden Audionachricht;
bei einem Empfangen einer neuen eingehenden Nachricht, Aufzeichnen der neuen eingehenden Nachricht und Erzeugen eines neuen Nachrichtendatensatzes, und Vergleichen eines zweiten eindeutigen Anrufer-Identifizierers für einen Ursprung der neuen eingehenden Nachricht mit dem ersten eindeutigen Anrufer-Identifizierer; und
bei einer Übereinstimmung, Gruppieren des "abgehende Nachricht"-Datensatzes mit dem neuen Nachrichtendatensatz.

6. Das Verfahren gemäß Anspruch 1, das weiter ein Positionieren des "eingehende Nachricht"-Datensatzes, der der eingehenden Audionachricht entspricht, auf dem Bildschirm angrenzend an den "abgehende Nachricht"-Datensatz aufweist.

7. Das Verfahren gemäß Anspruch 1, wobei der "eingehende Audionachricht"-Datensatz visuell als ein Unter-Datensatz des "abgehende Nachricht"-Datensatzes entsprechend der abgehenden Audionachricht dargestellt wird.

8. Das Verfahren gemäß Anspruch 1 oder Anspruch 2, wobei das Tätigen eines Anrufs an einen Empfänger, wenn ein Benutzer den "eingehende Audionachricht"-Datensatz über den Benutzerschnittstellenbildschirm auswählt, ein Ermöglichen aufweist, dass der Benutzer auswählen kann, einem Ursprungsanrufer der Audionachricht zu antworten; und
wenn der Benutzer auswählt zu antworten, Tätigen des Anrufs an den Empfänger,
wobei das Aufzeichnen der abgehenden Audionachricht in dem lokalen Speicher (218), während der Benutzer die abgehende Audionachricht in dem entfernten Sprachnachrichtensystem hinterlässt, ein gleichzeitiges Aufzeichnen der abgehenden Audionachricht in dem lokalen Speicher (218) aufweist;
wobei das Verfahren weiter aufweist:
Gruppieren des "abgehende Nachricht"-Datensatzes mit dem "eingehende Audionachricht"-Datensatz.

9. Das Verfahren gemäß einem der Ansprüche 1 bis 8, wobei der "eingehende Audionachricht"-Datensatz ein Anruferidentifizierungsfeld aufweist.

10. Das Verfahren gemäß einem der Ansprüche 1 bis 9, wobei der "eingehende Audionachricht"-Datensatz ein Zeitfeld aufweist.

11. Das Verfahren gemäß einem der Ansprüche 1 bis 10, das weiter aufweist, bei einem Empfangen eines Telefonanrufs von einem Anrufer, Setzen der handgehaltenen Vorrichtung (200) in einen Anrufbeantworter-Modus vor dem Aufzeichnen der eingehenden Audionachricht.

12. Das Verfahren gemäß Anspruch 11, das weiter ein Eintreten in den Anrufbeantworter-Modus bei einem Empfang einer Benutzereingabe zum Ignorieren eines eingehenden Telefonanrufs aufweist.

13. Das Verfahren gemäß Anspruch 11, das weiter ein automatisches Eintreten in den Anrufbeantworter-Modus in Reaktion auf eine Benutzereinstellung bei Empfang von eingehenden Telefonanrufen aufweist.

14. Das Verfahren gemäß einem der Ansprüche 1 bis 13, wobei das Aufzeichnen der eingehenden Audionachricht aufweist:
Nehmen von digitalen Sprachabtastwerten unter Verwendung eines Audio-Codecs (230N), der mit dem lokalen Speicher (218) und einem drahtlosen Empfänger (250) in der handgehaltenen Vorrichtung (200) gekoppelt ist;
Komprimieren der Sprachabtastwerte; und
Schreiben der komprimierten Sprachabtastwerte in den lokalen Speicher (218).

15. Das Verfahren gemäß Anspruch 14, wobei die komprimierten Sprachabtastwerte unter Verwendung eines MP3-Audiodateiformats in den lokalen Speicher (218) geschrieben werden.

16. Das Verfahren gemäß Anspruch 14 oder Anspruch 15, wenn abhängig von Anspruch 2, wobei die Wiedergabe aufweist:
Lesen von komprimierten Sprachabtastwerten aus dem lokalen Speicher (218);
Dekomprimieren der komprimierten Sprachabtastwerte unter Verwendung des Audio-Codecs (230N); und
Ausgeben der dekomprimierten Abtastwerte in dem Lautsprecher (211).

17. Das Verfahren gemäß Anspruch 16, wobei der Audio-Codec (230N) eine MP3-Wiedergabeeinrichtung aufweist.

18. Das Verfahren gemäß einem der Ansprüche 1 bis 17, wobei der Benutzerschnittstellenbildschirm der handgehaltenen Vorrichtung (200) auch Textnachrichtdatensätze zusammen mit dem Audionachrichtdatensatz darstellt.

19. Ein handgehaltenen Vorrichtung (200), die aufweist:
einen drahtlosen Empfänger (250);
einen Lautsprecher (211);
einen Speicher (218);
eine Anzeige (226);
ein Mikrofon (212); und
zumindest einen Prozessor (228, 258), der aufweist:
Mittel zum Übergang der Vorrichtung (200) in einen Anrufbeantworter-Modus und Aufzeichnen einer eingehenden Audionachricht von dem Anrufer in dem Speicher (218);
Mittel zum Anzeigen eines "eingehende Audionachricht"-Datensatzes, der der Audionachricht entspricht, in einem Benutzerschnittstellenbildschirm auf der Anzeige (226), wobei der Bildschirm gleichzeitig Email-Nachricht-Datensätze und den "eingehende Audionachricht"-Datensatz darstellt;
Mittel zum Erfassen, dass ein abgehender Anruf durch ein entferntes Sprachnachrichtensystem beantwortet wird;
Mittel zum Senden einer abgehenden Audionachricht an das entfernte Sprachnachrichtensystem;
Mittel zum Aufzeichnen der abgehenden Audionachricht, die an dem entfernten Sprachnachrichtensystem hinterlassen wurde, als einen "abgehende Nachricht"-Datensatz in dem Speicher (218) unter Verwendung des Mikrofons (212);
Mittel zum selektiven Gruppieren des "abgehende Nachricht"-Datensatzes mit dem "eingehende Nachricht"-Datensatz; und
Mittel zum Anzeigen des "abgehende Nachricht"-Datensatzes entsprechend der abgehenden Audionachricht auf dem Benutzerschnittstellenbildschirm.

20. Die Vorrichtung gemäß Anspruch 19, wobei der zumindest eine Prozessor (228) weiter Mittel aufweist zur Wiedergabe der eingehenden Audionachricht über den Lautsprecher (211) bei Auswahl des Nachrichtendatensatzes durch einen Benutzer.

21. Die Vorrichtung gemäß Anspruch 21 oder Anspruch 2, das weiter einen Audio-Codec (230N) aufweist.

22. Die Vorrichtung gemäß einem der Ansprüche 19 bis 21, wobei der zumindest eine Prozessor (228) Mittel aufweist zum Anzeigen von Textnachrichtdatensätzen gleichzeitig mit dem "eingehende Audionachricht"-Datensatz.

23. Die Vorrichtung gemäß einem der Ansprüche 19 bis 22, wobei der zumindest eine Prozessor einen Prozessor (228) und einen digitalen Signalprozessor (DSP - digital signal processor) (258) in Kommunikation mit dem Prozessor (228) aufweist.

24. Die Vorrichtung gemäß Anspruch 23, wobei der DSP (258) ausgebildet ist zum Ausführen von Anrufbeantwortererfassungssoftware.

25. Ein computerlesbares Medium zum Speichern von computerlesbaren Anweisungen, die durch einen Prozessor (228) einer Computervorrichtung (200) ausführbar sind, um zu veranlassen, dass die Vorrichtung (200) die Schritte des Verfahrens gemäß einem der Ansprüche 1 bis 18 implementiert.

## Revendications

1. Procédé de fourniture d'un service de messagerie vocale dans un dispositif sans fil portatif (200), comprenant les étapes consistant à :
enregistrer un message audio entrant dans une mémoire locale (218) dudit dispositif portatif (200) ; et
afficher un enregistrement de message audio entrant, correspondant audit message audio entrant, sur un écran d'interface utilisateur dudit dispositif portatif (200), ledit écran d'interface utilisateur présentant concomitamment des enregistrements de courriers électroniques en même temps que ledit enregistrement de message audio entrant ;
passer un appel à un destinataire ;
détecter automatiquement qu'il est répondu audit appel par un système de messagerie vocale distant ;
transmettre un message audio sortant audit système de messagerie vocale distant ; et
enregistrer le message audio sortant pour ledit appel dans ladite mémoire locale (218), ce qui se traduit par un enregistrement de message sortant ;
grouper sélectivement ledit enregistrement de message sortant avec ledit enregistrement de message entrant ; et
afficher sur ledit écran d'interface utilisateur ledit enregistrement de message sortant pour ledit appel.

2. Procédé selon la revendication 1, comprenant, en outre, lors de la sélection dudit enregistrement de message audio entrant par le biais dudit écran d'interface utilisateur dudit dispositif portatif (200), l'étape consistant à faire réécouter ledit message audio entrant enregistré dans ladite mémoire locale (218) par l'intermédiaire d'un haut-parleur (211) dudit dispositif portatif (200).

3. Procédé selon la revendication 1, comprenant, en outre les étapes consistant à :
comparer un numéro de téléphone composé pour laisser ledit message audio sortant avec un numéro de téléphone d'émission associé audit enregistrement de message audio entrant et, lorsqu'il y a correspondance, grouper ledit enregistrement de message sortant avec ledit enregistrement de message entrant.

4. Procédé selon la revendication 1, dans lequel ledit système de messagerie vocale distant comprend un dispositif portatif distant, ledit procédé comprenant, en outre, l'échange de données d'association de message avec ledit dispositif portatif distant pour grouper ledit enregistrement de message sortant avec ledit enregistrement de message entrant.

5. Procédé selon la revendication 1, comprenant, en outre les étapes consistant à :
stocker un premier identifiant d'appelant unique correspondant à un destinataire dudit message audio sortant en association avec ledit message audio sortant ;
lors de la réception d'un nouveau message entrant, enregistrer ledit nouveau message entrant et créer un nouvel enregistrement de message, et comparer un second identifiant d'appelant unique pour un émetteur dudit nouveau message entrant avec ledit premier identifiant d'appelant unique ; et
lorsqu'il y a correspondance, grouper ledit enregistrement de message sortant avec ledit nouvel enregistrement de message.

6. Procédé selon la revendication 1, comprenant, en outre le positionnement dudit enregistrement de message audio entrant correspondant audit message audio entrant sur ledit écran en un emplacement adjacent audit enregistrement de message sortant.

7. Procédé selon la revendication 1, dans lequel ledit enregistrement de message audio entrant est présenté visuellement en tant que sous-enregistrement dudit enregistrement de message sortant correspondant audit message audio sortant.

8. Procédé selon la revendication 1 ou la revendication 2, dans lequel ladite étape consistant à passer un appel à un destinataire comprend, lorsqu'un utilisateur sélectionne ledit enregistrement de message audio entrant par le biais dudit écran d'interface utilisateur, l'étape consistant à permettre audit utilisateur de choisir de répondre à un appelant original dudit message audio ; et
lorsque ledit utilisateur choisit de répondre, passer ledit appel audit destinataire,
l'enregistrement dudit message audio sortant dans ladite mémoire locale (218) comprenant, tandis que ledit utilisateur laisse le message audio sortant dans ledit système de messagerie vocale distant, enregistrer en parallèle ledit message audio sortant dans ladite mémoire locale (218) ;
le procédé comprenant, en outre, l'étape consistant à :
grouper ledit enregistrement de message sortant avec ledit enregistrement de message audio entrant.

9. Procédé selon l'une quelconque des revendications 1 à 8, dans lequel ledit enregistrement de message audio entrant comprend un champ d'identification d'appelant.

10. Procédé selon l'une quelconque des revendications 1 à 9, dans lequel ledit enregistrement de message audio entrant comprend une zone temps.

11. Procédé selon l'une quelconque des revendications 1 à 10, comprenant, en outre, lors de la réception d'un appel téléphonique d'un appelant, placer ledit dispositif portatif (200) en mode répondeur avant ledit enregistrement dudit message audio entrant.

12. Procédé selon la revendication 11, comprenant, en outre, l'entrée automatique dans ledit mode répondeur en réponse à un réglage utilisateur, lors de la réception d'appels téléphoniques entrants.

13. Procédé selon la revendication 11, comprenant en outre l'entrée automatique dans le mode de répondeur en réponse au réglage par l'utisateur lors de la reception des appels téléphoniques entrants.

14. Procédé selon l'une quelconque des revendications 1 à 13, dans lequel ledit enregistrement dudit message audio entrant comprend les étapes consistant à :
prélever des échantillons vocaux numériques au moyen d'un codec audio (230N) couplé à ladite mémoire locale (218) et à un récepteur sans-fil (250) dans ledit dispositif portatif (200) ;
compresser lesdits échantillons vocaux ; et
écrire les échantillons vocaux compressés dans ladite mémoire locale (218).

15. Procédé selon la revendication 14, dans lequel lesdits échantillons vocaux compressés sont écrits dans ladite mémoire locale (218) en utilisant un format de fichier audio MP3.

16. Procédé selon la revendication 14 ou la revendication 15 lorsque dépendante de la revendication 2, dans lequel ladite réécoute comprend les étapes consistant à :
lire les échantillons vocaux compressés depuis ladite mémoire locale (218) ;
décompresser lesdits échantillons vocaux compressés en utilisant ledit codec audio (230N) ; et
communiquer en sortie lesdits échantillons décompressés dans ledit haut-parleur (211).

17. Procédé selon la revendication 16, dans lequel ledit codec audio (230N) comprend un lecteur MP3.

18. Procédé selon l'une quelconque des revendications 1 à 17, dans lequel ledit écran d'interface utilisateur dudit dispositif portatif (200) présente également des enregistrements de messages textes en même temps que ledit enregistrement de message audio.

19. Dispositif portatif (200) comprenant :
un récepteur sans fil (250);
un haut-parleur (211) ;
une mémoire (218) ;
un affichage (226);
un microphone (212) ; et
au moins un processeur (228, 258), comprenant:
des moyens pour faire passer ledit dispositif (200) en mode répondeur et enregistrer un message audio entrant provenant dudit appelant dans ladite mémoire (218) ;
des moyens pour afficher un enregistrement de message audio entrant correspondant audit message audio sur un écran d'interface utilisateur sur ledit affichage (226), ledit écran présentant concomitamment des enregistrements de courriers électroniques et ledit enregistrement de message audio entrant ;
des moyens pour détecter qu'il est répondu à un appel sortant par un système de messagerie vocale distant ;
des moyens pour transmettre un message audio sortant audit système de messagerie vocale distant ;
des moyens pour enregistrer dans ladite mémoire (218), en utilisant ledit microphone (212), le message audio sortant laissé sur ledit système de messagerie vocale distant en tant qu'enregistrement de message sortant ;
des moyens pour grouper sélectivement ledit enregistrement de message sortant avec ledit enregistrement de message entrant ; et
des moyens pour afficher ledit enregistrement de message sortant correspondant audit message audio sortant sur ledit écran d'interface utilisateur.

20. Dispositif selon la revendication 19, dans lequel ledit au moins un processeur (228) comprend, en outre, des moyens pour réécouter ledit message audio entrant par le biais dudit haut-parleur (211) lors de la sélection dudit enregistrement de message par un utilisateur.

21. Dispositif selon la revendication 19 ou la revendication 2, comprenant, en outre, un codec audio (230N) .

22. Dispositif selon l'une quelconque des revendications 19 à 21, dans lequel ledit au moins un processeur (228) comprend des moyens pour afficher des enregistrements de messages textes concomitamment audit enregistrement de message audio entrant.

23. Dispositif selon l'une quelconque des revendications 19 à 22, dans lequel ledit au moins un processeur comprend un processeur (228) et un processeur de signaux numériques "DSP" (258) en communication avec ledit processeur (228).

24. Dispositif selon la revendication 23, dans lequel ledit DSP (258) est apte à exécuter des logiciels de détection de répondeur.

25. Support, pouvant être lu par ordinateur, stockant des instructions, pouvant être lues par ordinateur, exécutables par un processeur (228) d'un dispositif informatique (200) afin d'amener ledit dispositif (200) à mettre en oeuvre les étapes du procédé selon l'une quelconque des revendications 1 à 18.
